# EUROPEAN PATENT APPLICATION

(11) **EP 3 842 387 A1**
(43) Date of publication of application: **30.06.2021**
(21) Application number: 19851496.0
(22) Date of filing: 08.07.2019
(51) Int. Cl.: C01D 15/08, B03C 1/00, B03C 1/005, B03C 1/025, C01D 15/00, C01G 45/12, C01G 51/00, C01G 53/00, H01M 4/505, H01M 4/525

(54) **METHOD FOR PRODUCING REFINED LITHIUM COMPOUND AND METHOD FOR PRODUCING LITHIUM TRANSITION METAL COMPLEX OXIDE**

(30) Priority: 20.08.2018 JP 2018154203
(71) Applicant: Tanaka Chemical Corporation, Fukui-shi, Fukui 910-3131 (JP)
(72) Inventor: TAKAKUWA, Masahiro, Fukui-shi, Fukui 910-3131 (JP)
(74) Representative: Dey, Michael
(86) International application number: PCT/JP2019/026933
(87) International publication number: WO 2020/039772

(57) **Abstract**

Provided are a method for producing a purified lithium compound excellent in production efficiency of the purified lithium compound, capable of being applied to various types of lithium compounds, and capable of reducing energy consumption in obtaining the purified lithium compound and a method for producing a lithium transition metal composite oxide using the purified lithium compound obtained by said production method.

A method for producing a purified lithium compound includes a crushing step of disaggregating aggregation of a crude lithium compound containing a magnetic substance and a magnetic separation treatment step of conducting magnetic separation in a dry manner on the crushed crude lithium compound using a magnetic separator to remove the magnetic substance from the crushed crude lithium compound.

## Description

### Technical Field

The present invention relates to a method for producing a purified lithium compound excellent in efficiency in a purification process and to a method for producing a lithium transition metal composite oxide using the purified lithium compound.

### Background Art

In recent years, lithium secondary batteries have been used in various fields such as portable devices and vehicles using electricity as a single power source or in combination. A lithium secondary battery is provided with a positive electrode, a negative electrode, a separator sandwiched between the positive electrode and the negative electrode, and an electrolyte disposed between the positive electrode and the negative electrode. The positive electrode of the lithium secondary battery can be produced by preparing a positive electrode mixture including a lithium transition metal composite oxide, which is a positive electrode active material, a conductive material, and a binder and allowing a positive electrode current collector to support the positive electrode mixture.

A lithium transition metal composite oxide is used as the positive electrode active material used for the positive electrode of the lithium secondary battery. The lithium transition metal composite oxide is produced by mixing a transition metal composite hydroxide such as a hydroxide including nickel, cobalt and/ or manganese or a transition metal composite oxide such as an oxide including nickel, cobalt and/ or manganese, which is a precursor, with a lithium compound (a lithium salt) followed by firing, for example.

Here, the positive electrode active material may include magnetic powder such as metal powder including iron powder, stainless powder, and the like derived from a raw material of the positive electrode active material. When magnetic powder is mixed into the positive electrode active material, a micro-short circuit may be caused between electrodes even the mixed amount is a trace amount. When a micro-short circuit occurs between electrodes, a capacity of the lithium secondary battery decreases, and charge and discharge characteristics of the lithium secondary battery may be affected. Therefore, standards regarding magnetic substance elements (Fe and the like) in the positive electrode active material are getting stricter every year. Especially, a magnetic substance element derived from a lithium compound added to the precursor of the lithium transition metal composite oxide is mixed into the positive electrode active material.

Therefore, in producing the lithium transition metal composite oxide, a magnetic substance included in the lithium compound is required to be removed in advance to sufficiently reduce the content of the magnetic substance. While the lower the content of the magnetic substance included in the lithium compound is, the more preferable it is, it is preferable that the content of the magnetic substance is reduced to less than 1.0 ppm (on a mass basis), for example. As a method of removing the magnetic substance included in the lithium compound, a method for removing a magnetic substance from impure Li₂CO₃ through a step of reacting impure Li₂CO₃ in a first aqueous solution with CO₂ to produce a second aqueous solution containing dissolved LiHCO₃, a dissolved compound including impurities from the impure Li₂CO₃, and an insoluble compound; a step of separating unreacted CO₂ and the insoluble compound from the second aqueous solution; a step of separating dissolved impurities from the second aqueous solution using an ion selective medium such as an ion-exchange resin; and a step of precipitating Li₂CO₃ from the second aqueous solution (Patent Literature 1) is exemplified, for example.

The method of Patent Literature 1 is a method for obtaining a purified lithium compound in a wet manner, and a lithium compound before purification including a magnetic substance such as a metal component, that is, a crude lithium compound is made into a state of an aqueous solution so as to surely remove the magnetic substance. Accordingly, in the method of Patent Literature 1, when the lithium compound is precipitated to be recovered after the magnetic substance is removed in the state of an aqueous solution, heating concentration of the aqueous solution is required.

However, in Patent Literature 1, which is a purification method in a wet manner, while the magnetic substance can be surely removed, the purification processes are complicated, and loss of the lithium compound is generated; therefore, room for improvement in production efficiency of a purified lithium compound has been left. In addition, when Patent Literature 1, which is a purification method in a wet manner, is applied to lithium hydroxide, a portion thereof may be carbonated, and there are some types of the lithium compound that are not intrinsically suitable for purification in a wet manner. Furthermore, in Patent Literature 1, there has been a problem of requiring a large amount of energy consumption in recovering the lithium compound having been purified from the aqueous solution of the lithium compound.

### Document List

### Patent Literature

Patent Literature 1: Japanese Patent Application Publication No. 2001-525313

### Summary of Invention

### Technical Problem

In view of the above circumstances, the present invention aims at providing a method for producing a purified lithium compound excellent in production efficiency of the purified lithium compound, capable of being applied to various types of lithium compounds, and capable of reducing energy consumption in obtaining the purified lithium compound and providing a method for producing a lithium transition metal composite oxide using the purified lithium compound obtained by said production method.

### Solution to Problem

The purport of configurations of the present invention to solve the above problem is as follows.
[1] A method for producing a purified lithium compound, including:
   a crushing step of disaggregating aggregation of a crude lithium compound containing a magnetic substance; and
   a magnetic separation treatment step of conducting magnetic separation in a dry manner on the crushed crude lithium compound using a magnetic separator to remove the magnetic substance from the crushed crude lithium compound.
[2] The method for producing a purified lithium compound according to [1], wherein the crushing is performed using a sieve having an opening of 40 µm or more and 700 µm or less.
[3] The method for producing a purified lithium compound according to [1] or [2], wherein the magnetic separator is an electromagnetic separator.
[4] The method for producing a purified lithium compound according to any one of [1] to [3], wherein the magnetic separation is conducted a plurality of times.
[5] The method for producing a purified lithium compound according to any one of [1] to [4], wherein the magnetic separation is conducted five or more times.
[6] The method for producing a purified lithium compound according to any one of [1] to [5], wherein a magnetic flux density of a magnetic separation unit included in the magnetic separator is 3000 gauss or more.
[7] The method for producing a purified lithium compound according to any one of [1] to [6], wherein the lithium compound includes lithium carbonate.
[8] The method for producing a purified lithium compound according to any one of [1] to [7], wherein the lithium compound is used for producing a lithium transition metal composite oxide.
[9] A method for producing a lithium transition metal composite oxide, including:
   a crushing step of disaggregating aggregation of a crude lithium compound containing a magnetic substance;
   a magnetic separation treatment step of conducting magnetic separation in a dry manner on the crushed crude lithium compound using a magnetic separator to remove the magnetic substance from the crushed crude lithium compound and purify a lithium compound; and
   a firing step of mixing the purified lithium compound with a transition metal composite hydroxide or a transition metal composite oxide followed by firing.

In the aspect of [1] above, by virtue of subjecting a crude lithium compound containing a magnetic substance to crushing treatment, a degree of aggregation of the crude lithium compound is reduced to impart a high dispersion state to the crude lithium compound. In addition, in the aspect of [1] above, since magnetic separation in a dry manner is performed on the crude lithium compound having been subjected to crushing treatment using a magnetic separator, a step of separately feeding water to the crude lithium compound, which is a target to be purified, may not be included. In addition, the crude lithium compound can be purified by removing the magnetic substance, which is an impurity, from the crude lithium compound.

The electromagnetic separator which is a magnetic separator in the aspect of [3] above is provided with a screen, and the screen is magnetized by an electromagnet provided in the electromagnetic separator and serves as a magnetic separation unit. The magnetic substance included in the crude lithium compound can be removed by magnetic force of the screen by allowing the crude lithium compound to pass through the magnetized screen.

In the aspect of [4] above, magnetic separation is conducted a plurality of times by allowing a lithium compound which is a target to be purified to pass through the magnetic separator a plurality of times.

### Effects of Invention

According to an aspect of the present invention, by virtue of conducting magnetic separation in a dry manner on the crude lithium compound using the magnetic separator after the crude lithium compound containing a magnetic substance is subjected to crushing treatment, production efficiency of the purified lithium compound is excellent. That is, since the degree of aggregation of the crude lithium compound is reduced by crushing the crude lithium compound containing a magnetic substance, clogging of the magnetic separation unit due to the lithium compound is prevented when the crude lithium compound having been crushed is allowed to pass through the magnetic separation unit formed into a grid-like or slit structure, for example, of the magnetic separator. As a result, magnetic separation treatment performance of the magnetic separator is improved; hence, production efficiency of the purified lithium compound is improved. In addition, by virtue of reducing the degree of aggregation of the crude lithium compound by subjecting the crude lithium compound containing a magnetic substance to sieve treatment, the magnetic substance incorporated into the inside of the aggregated crude lithium compound is located at the vicinity of the surface of the crude lithium compound. When the magnetic substance is located at the vicinity of the surface of the crude lithium compound, the magnetic substance is made easier to magnetically attach to the magnetic separation unit of the magnetic separator; consequently, production efficiency of the purified lithium compound is improved.

In addition, according to an aspect of the present invention, since purification is performed in a dry manner in which the crude lithium compound containing a magnetic substance is not made into an aqueous solution and is purified with its powder form remained, even when the present invention is applied to a crude lithium hydroxide, for example, carbonation of a portion of the crude lithium hydroxide can be prevented; therefore, the purification of the present invention can be applicable to various types of lithium compounds. Furthermore, according to an aspect of the present invention, by virtue of purification in a dry manner, a purified lithium compound in powder form can be obtained without undergoing a heating or drying process. Accordingly, energy consumption in obtaining a purified lithium compound in powder form can be reduced, and loads on the environment can be consequently prevented. In addition, since a purified lithium compound in powder form can be obtained without undergoing a heating or drying process, a production time of the purified lithium compound can be shortened.

According to an aspect of the present invention, by virtue of conducting crushing using a sieve having an opening of 40 µm or more and 700 µm or less, crushing treatment can be smoothly performed while surely decreasing aggregation of the crude lithium compound.

According to an aspect of the present invention, since the magnetic separator is an electromagnetic separator, the magnetic substance can be surely removed from the crude lithium compound even by magnetic separation in a dry manner.

According to an aspect of the present invention, by virtue of conducting magnetic separation a plurality of times, the magnetic substance can be surely removed from the crude lithium compound without increasing the size of the magnetic separator.

According to an aspect of the present invention, since a magnetic flux density of the magnetic separation unit included in the magnetic separator is 3000 gauss or more, the magnetic substance can be surely removed from the crude lithium compound even by magnetic separation in a dry manner.

According to an aspect of the present invention, by virtue of mixing the purified lithium compound obtained by the above-described method with a transition metal composite hydroxide or a transition metal composite oxide followed by firing, a lithium transition metal composite oxide in which mixing of the magnetic substance is prevented can be obtained. By virtue of using the lithium transition metal composite oxide in which mixing of the magnetic substance is prevented for a positive electrode of a lithium secondary battery, capacity degradation of the lithium secondary battery can be prevented.

### Brief Description of Drawings

[FIG. 1] A flow chart of a method for producing a purified lithium compound.
[FIG. 2] An illustrative diagram showing an outline of a magnetic separation treatment step for removing a magnetic substance from a crude lithium compound.

### Description of Embodiments

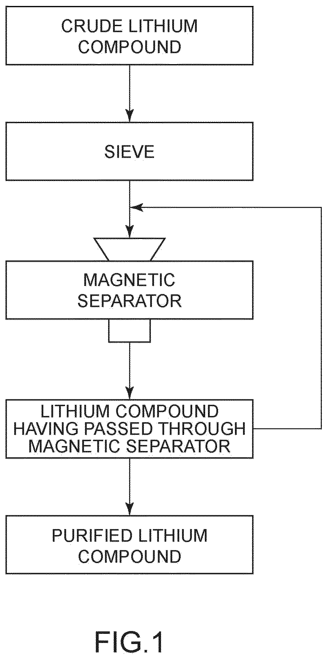

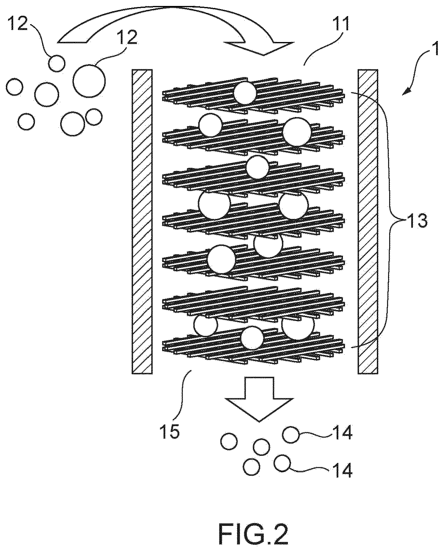

Next, a method for producing a purified lithium compound according to the present invention will be described in detail using drawings. Incidentally, FIG. 1 is a flow chart of the method for producing a purified lithium compound. FIG. 2 is an illustrative diagram showing an outline of a magnetic separation treatment step for removing a magnetic substance from a crude lithium compound.

As shown in FIG. 1, the method for producing a purified lithium compound according to the present invention includes a crushing step of disaggregating aggregation of a crude lithium compound containing a magnetic substance, and a magnetic separation treatment step of conducting magnetic separation in a dry manner on the crushed crude lithium compound using a magnetic separator to remove the magnetic substance from the crushed crude lithium compound. The magnetic substance contained in the crude lithium compound includes metal powder such as iron powder and stainless powder. The magnetic substance contained in the crude lithium compound is an impurity.

A content of the magnetic substance of the crude lithium compound which is a target to be purified is 1.0 ppm (on a mass basis, the same applies to the following) or more and 7.0 ppm or less, for example. In addition, in producing a purified lithium compound, while the higher the removal rate of the magnetic substance contained in the crude lithium compound is, the more preferable it is, the removal rate is 80% by mass or more, for example. In a case where the content of the magnetic substance in the crude lithium compound is 1.0 ppm or more and 7.0 ppm or less, the content of the magnetic substance in a purified lithium compound is reduced to less than 1.0 ppm, for example.

### (Crushing step)

First, the crude lithium compound containing the magnetic substance is crushed, and aggregation of the crude lithium compound is disaggregated to improve dispersibility. As shown in FIG. 1, as the crushing step, sieve treatment which allows the crude lithium compound containing the magnetic substance to pass through a sieve is exemplified, for example. An average particle diameter of an aggregated crude lithium compound before passing through the sieve is about 1 mm to 5 mm, for example. Both of the lithium compound and the magnetic substance are powder, and the lithium compound has a property of easily aggregating. The degree of aggregation of the crude lithium compound is reduced by subjecting the crude lithium compound in powder form to sieve treatment to impart a high dispersion state and flowability to the crude lithium compound. In addition, by virtue of reducing the degree of aggregation of the crude lithium compound through sieve treatment, the magnetic substance incorporated into the inside of the aggregated crude lithium compound is located at the vicinity of the surface of the crude lithium compound.

In the sieve treatment, the crude lithium compound can be subjected to sieve treatment by putting the crude lithium compound in a powder state on a sieve having a predetermined opening, appropriately shaking the sieve as needed, and allowing the crude lithium compound to pass through the sieve for example. Incidentally, when the crude lithium compound is subjected to sieve treatment, it is preferable that the crude lithium compound is allowed to pass through the sieve in a state of being dried without adding liquid such as water from the viewpoint of facilitating the sieve treatment step and preventing aggregation of the crude lithium compound.

While the opening of the sieve is not particularly limited, an opening of 700 µm or less is preferable, an opening of 400 µm or less is more preferable, and an opening of 350 µm or less is especially preferable, from the viewpoint of surely reducing aggregation of the crude lithium compound by the function of the sieve. In addition, the opening of the sieve is preferably an opening of 40 µm or more, more preferably an opening of 75 µm or more, and especially preferably an opening of 150 µm or more, from the viewpoint of reducing aggregation of the crude lithium compound by smoothly allowing the crude lithium compound to pass through the sieve while improving efficiency of the sieve treatment step. Incidentally, the above-described upper limit and lower limit can be arbitrarily combined. By virtue of disaggregating aggregation of the crude lithium compound by allowing the crude lithium compound to pass through the sieve, the average particle diameter of the crude lithium compound becomes about 5 µm to 700 µm, for example.

### (Magnetic separation treatment step)

As shown in FIG. 1, the magnetic substance is removed from the crude lithium compound having been subjected to sieve treatment by conducting magnetic separation in a dry manner on the crude lithium compound in a powder state, which is in a state where the crude lithium compound is crushed (subjected to sieve treatment, for example) and aggregation is disaggregated, using a magnetic separator. The crude lithium compound can be purified by removing the magnetic substance from the crude lithium compound.

As shown in FIG. 2, magnetic separation treatment can perform magnetic separation, for example, by feeding the crude lithium compound 12 in a powder state having been subjected to sieve treatment from a feeding port 11 provided above the magnetic separator 1, and allowing the magnetic substance included in the crude lithium compound 12 to magnetically attach to a magnetic separation unit 13 via magnetic force of the magnetic separation unit 13 while the crude lithium compound 12 falls from an upper side to a lower side through the magnetic separation unit 13 provided inside the magnetic separator 1. Meanwhile, since the lithium compound is not a magnetic substance, the lithium compound does not magnetically attach to the magnetic separator 1, and the lithium compound 14 in a powder state is discharged from a discharge port 15 provided below the magnetic separator 1. Accordingly, the lithium compound can be separated from the magnetic substance by magnetic separation treatment. Incidentally, in the present invention, since magnetic separation in a dry manner is performed using the magnetic separator 1, a step of separately feeding water to the crude lithium compound 12, which is a target to be purified, may not be included.

Since the crude lithium compound 12, which is a target of magnetic separation has been subjected to sieve treatment and in a state where aggregation is disaggregated, clogging of the magnetic separation unit 13 due to the lithium compound is prevented when the crude lithium compound 12 is allowed to pass through the magnetic separation unit 13 formed into a grid-like or slit structure, for example, of the magnetic separator 1. Accordingly, the feeding amount of the lithium compound into the magnetic separator 1 can be increased, and magnetic separation treatment performance of the magnetic separator 1 is improved; consequently, production efficiency of the purified lithium compound is improved. In addition, by virtue of crushing the crude lithium compound 12 in advance, the magnetic substance incorporated into the inside of the aggregated crude lithium compound 12 is located at the vicinity of the surface of the crude lithium compound 12; consequently, the magnetic substance is made easier to directly contact the magnetic separation unit 13 of the magnetic separator 1. Accordingly, the magnetic substance is made easier to magnetically attach to the magnetic separation unit 13, and production efficiency of the purified lithium compound is consequently improved.

In addition, since the crude lithium compound 12 containing the magnetic substance is purified with its powder (solid) form remained without being made into an aqueous solution, chemical change of the crude lithium compound 12 is prevented, which is applicable to various types of lithium compounds. Furthermore, since the crude lithium compound 12 containing the magnetic substance is purified with its powder form remained, a purified lithium compound in powder form can be obtained without undergoing heat or drying step. Accordingly, energy consumption in obtaining the purified lithium compound in powder form can be reduced, and loads on the environment are consequently prevented. In addition, since a purified lithium compound in powder form can be obtained without undergoing heat or drying step, a production time of the purified lithium compound can be shortened, and production processes of the purified lithium compound can be simplified.

As the magnetic separator 1, an electromagnetic separator can be exemplified, for example. By virtue of using an electromagnetic separator as the magnetic separator 1, the magnetic substance can be surely removed from the crude lithium compound 12 even in magnetic separation in a dry manner. The electromagnetic separator is provided with a grid-like screen, and this screen is magnetized by an electromagnet provided in the electromagnetic separator and serves as the magnetic separation unit 13. In addition, as shown in FIG. 2, multiple layers of the screen may be provided in a vertical direction to form the magnetic separation unit 13. In this case, the number of screens can be selected according to the degree of purification of the lithium compound to be allowed to pass through the screen and to the content of the magnetic substance.

While the number of times of magnetic separation treatment performed by the magnetic separator 1 is not particularly limited, it is preferable that magnetic separation treatment is conducted a plurality of times as shown in FIG. 1. That is, it is preferable that the lithium compound 14 discharged from the discharge port 15 of the magnetic separator 1 is fed to the feeding port 11 of the magnetic separator 1 again and subjected to magnetic separation treatment again. By virtue of conducting magnetic separation treatment a plurality of times, the magnetic substance can be surely removed to further improve purification degree of the lithium compound without increasing the size of the magnetic separator 1. In the case where magnetic separation treatment is conducted a plurality of times, the number of times thereof is preferably five or more, for example. Incidentally, crushing is not required to be performed again at the time of performing second and subsequent magnetic separation treatment.

While a magnetic flux density of the magnetic separation unit 13 is not particularly limited, a lower limit thereof is preferably 3000 gauss from the viewpoint of surely removing the magnetic substance from the crude lithium compound 12 even by magnetic separation in a dry manner, more preferably 6000 gauss from the viewpoint of further improving purification degree of the lithium compound, still more preferably 8000 gauss, and especially preferably 12000 gauss. Meanwhile, while the higher the upper limit of the magnetic flux density of the magnetic separation unit 13 is, the more preferable it is, the upper limit is 30000 gauss, for example.

As the lithium compound, which is a target to be purified, lithium carbonate, lithium hydroxide, and the like can be exemplified, for example.

The purified lithium compound obtained by the production method of the present invention can be used as a raw material of a lithium transition metal composite oxide, for example. The lithium transition metal composite oxide is used as a positive electrode active material of a lithium secondary battery.

Next, a method for producing a lithium transition metal composite oxide using the purified lithium compound obtained by the production method of the present invention will be described.

First, a transition metal composite hydroxide which is a precursor of the lithium transition metal composite oxide is prepared. In a preparation method of the transition metal composite hydroxide, a salt solution of a transition metal (for example, a salt solution (for example, a sulfate solution) of nickel, a salt solution (for example, a sulfate solution) of cobalt, a salt solution (for example, a sulfate solution) of manganese, and the like), a complexing agent, and a pH adjuster are firstly appropriately added to cause reaction by coprecipitation method in a reaction vessel so as to prepare transition metal composite hydroxide particles to obtain a suspended matter in a slurry state including the transition metal composite hydroxide particles. A solvent for the suspended matter includes water, for example.

The complexing agent is not particularly limited as long as it can form a complex with an ion of the transition metal (for example, nickel, cobalt, manganese, etc.) in an aqueous solution and includes ammonium ion supplying body (ammonium sulfate, ammonium chloride, ammonium carbonate, ammonium fluoride, etc.), hydrazine, ethylenediaminetetraacetic acid, nitrilotriacetic acid, uracildiacetic acid, and glycine, for example. Incidentally, at the time of precipitation, an alkali metal hydroxide (sodium hydroxide or potassium hydroxide, for example) may be added as needed so as to adjust the pH value of the aqueous solution.

When the pH adjuster and the complexing agent are appropriately supplied to the reaction vessel in succession besides the salt solution of the transition metal, the transition metal (for example, nickel, cobalt, manganese, etc.) is coprecipitated, and transition metal composite hydroxide particles are prepared. In coprecipitation reaction, substances in the reaction vessel are appropriately stirred while controlling a temperature of the reaction vessel to fall within a range of 10°C to 80°C, for example, preferably a range of 20°C to 70°C and controlling a pH value within the reaction vessel to fall within a pH range of 9 to 13, for example, preferably a pH range of 11 to 13 based on liquid temperature of 40°C as a standard. As the reaction vessel, a continuous type in which the formed transition metal composite hydroxide particles are overflowed for separation and a batch type in which the transition metal composite hydroxide particles are not discharged to the outside of the system until the completion of reaction can be exemplified, for example.

Transition metal composite hydroxide particles in a powder state, which are a precursor of a lithium transition metal composite oxide, can be obtained by filtering the transition metal composite hydroxide particles obtained in the above-described manner from the suspended matter followed by washing with water and performing heat treatment. In addition, transition metal composite oxide particles obtained by further subjecting the transition metal composite hydroxide particles to heat treatment as needed may be used as a precursor of the lithium transition metal composite oxide.

Thereafter, the precursor of the lithium transition metal composite oxide obtained in the above-described manner and the purified lithium compound obtained by crushing the crude lithium compound followed by magnetic separation treatment are mixed to obtain a mixture. Next, a lithium transition metal composite oxide can be produced by firing the obtained mixture. The firing step includes primary firing and secondary firing carried out after primary firing, for example. In addition, in the mixing and/or firing step, an additional transition metal (for example, Al, W, Zr, etc.) may be appropriately added. In primary firing, the firing temperature includes a temperature of 700°C to 1000°C, for example, the firing time includes a time of 5 hours to 20 hours, for example, and the temperature rising rate includes a rate of 50 to 550°C/h, for example. While an atmosphere of primary firing is not particularly limited, air, oxygen, and the like are exemplified, for example. While a firing furnace used for primary firing is not particularly limited, a box furnace of a stationary type, a roller hearth type continuous furnace, and the like are exemplified, for example. In addition, in secondary firing, the firing temperature includes a temperature of 600°C or higher and 1000°C or lower, for example, the firing time includes a time of 1 to 20 hours, for example, and the temperature rising rate includes a rate of 50 to 550°C/h, for example. While an atmosphere of secondary firing is not particularly limited, air, oxygen, and the like are exemplified. While a firing furnace used for secondary firing is not particularly limited, a box furnace of a stationary type, a roller hearth type continuous furnace, and the like are exemplified.

### [Examples]

Next, examples of the method for producing a purified lithium compound according to the present invention will be described, but the present invention is not limited to these examples unless it is beyond the spirit of the present invention.

### Example 1

Sieve treatment was performed by allowing 10 kg of crude lithium carbonate containing 3.0 ppm of a magnetic substance in powder form to pass through a sieve having an opening of 300 µm. A vibration sieving device ("Sato's system Vibro Separator" manufactured by KOEI SANGYO CO., LTD.) was used for the sieve. The content of the magnetic substance in the crude lithium carbonate was measured by collecting magnetic powder in a wet manner.

Thereafter, magnetic separation treatment was performed by supplying the crude lithium carbonate having been subjected to sieve treatment to a magnetic separator at a supplying amount of 1.0 kg/minute and removing the magnetic substance from the crude lithium carbonate. Magnetic separation treatment was performed five times to obtain purified lithium carbonate. An electromagnetic separator ("Electromagnetic Separator CG-150HHH model" manufactured by Nippon Magnetics, Inc.) was used as the magnetic separator.

Specifications of the electromagnetic separator are as follows.
Magnetic flux density of screen: 12000 gauss
Screen shape: grid-like shape, opening of 5 mm, and φ 150 mm

The number of screens: 20 screens stacked in vertical direction

### Example 2

Purified lithium carbonate was obtained in the same manner as in Example 1 except that the crude lithium carbonate having been subjected to sieve treatment was supplied to the magnetic separator at a supplying amount of 2.0 kg/minute.

### Comparative Example 1

Lithium carbonate was obtained in the same manner as in Example 1 except that crude lithium carbonate without being subjected to sieve treatment was supplied to the magnetic separator at a supplying amount of 0.3 kg/minute. The reason why the supplying amount was set to 0.3 kg/minute in Comparative Example 1 was that when the supplying amount was 1.0 kg/minute, clogging occurred in the magnetic separation path, lithium carbonate could not be supplied to the magnetic separator, and the supplying amount was limited to 0.3 kg/minute.

Results of the content (ppm) of the magnetic substance on a mass basis and the removal rate (mass%) of the magnetic substance with respect to lithium carbonate obtained by the production method of each of Examples 1 and 2 and Comparative Example 1 under the production conditions for a purified lithium carbonate in each of Examples 1 and 2 and Comparative Example 1 are shown in Table 1 below.

**[Table 1]**

| | | Example 1 | Example 2 | Comparative Example 1 |
|---|---|---|---|---|
| Production conditions | Sieve treatment | Presence | Presence | Absence |
| | Supplying amount of lithium carbonate to magnetic separator (kg/minute) | 1,0 | 2,0 | 0,3 |
| | Screen opening (mm) | 5 | 5 | 5 |
| | Magnetic flux density of screen (gauss) | 12000 | 12000 | 12000 |
| | The number of times of magnetic separation | 5 | 5 | 5 |
| Results | Magnetic substance content before magnetic separation treatment (ppm) | 3,0 | 3,0 | 3,0 |
| | Magnetic substance content after performing magnetic separation treatment once (ppm) | 1,6 | 1,6 | 2,0 |
| | Magnetic substance removal rate after performing magnetic separation treatment once (mass%) | 46,7 | 46,7 | 33,3 |
| | Magnetic substance content after performing magnetic separation treatment twice (ppm) | 1,2 | 1,2 | 1,6 |
| | Magnetic substance removal rate after performing magnetic separation treatment twice (mass%) | 60,0 | 60,0 | 46,7 |
| | Magnetic substance content after performing magnetic separation treatment three times (ppm) | 0,8 | 1,2 | 1,8 |
| | Magnetic substance removal rate after performing magnetic separation treatment three times (mass%) | 73,3 | 60,0 | 40,0 |
| | Magnetic substance content after performing magnetic separation treatment four times (ppm) | 0,6 | 0,6 | 1,4 |
| | Magnetic substance removal rate after performing magnetic separation treatment four times (mass%) | 80,0 | 80,0 | 53,3 |
| | Magnetic substance content after performing magnetic separation treatment five times (ppm) | 0,6 | 0,4 | 1,0 |
| | Magnetic substance removal rate after performing magnetic separation treatment five times (mass%) | 80,0 | 86,7 | 66,7 |

From Table 1 above, in lithium carbonate of Examples 1 and 2, which was obtained by performing the sieve treatment step and the magnetic separation treatment step, the magnetic substance decreased to 0.6 ppm (removal rate of magnetic substance: 80.0% by mass) and 0.4 ppm (removal rate of magnetic substance: 86.7% by mass), respectively, after performing magnetic separation treatment five times. Accordingly, in Examples 1 and 2, purified lithium carbonate in which purity of lithium was high could be obtained. with the content of the magnetic substance being 0.6 ppm or less. In addition, in Examples 1 and 2, the feeding amounts of lithium carbonate to the magnetic separator were 1.0 kg/minute and 2.0 kg/minute, respectively, and magnetic separation treatment speed could be improved.

On the other hand, in lithium carbonate of Comparative Example 1, which was obtained by performing the magnetic separation treatment step without performing the sieve treatment step, the magnetic substance remained at 1.0 ppm (removal rate of magnetic substance: 66.7% by mass) after performing magnetic separation treatment five times. Accordingly, in Comparative Example 1, lithium carbonate sufficiently purified could not be obtained. In addition, in Comparative Example 1, as described above, the feeding amount of lithium carbonate to the magnetic separator remained at 0.3 kg/minute, and magnetic separation treatment speed could not be improved.

### [Industrial Applicability]

The present invention can easily and efficiently produce a purified lithium compound in which a content of a magnetic substance is sufficiently reduced; therefore, the present invention is highly useful in a field of producing a lithium raw material for a lithium transition metal composite oxide used as a positive electrode active material of a lithium secondary battery.

### List of Reference Signs

1 magnetic separator,
12 crude lithium compound

## Claims

1. A method for producing a purified lithium compound, comprising:
a crushing step of disaggregating aggregation of a crude lithium compound containing a magnetic substance; and
a magnetic separation treatment step of conducting magnetic separation in a dry manner on the crushed crude lithium compound using a magnetic separator to remove the magnetic substance from the crushed crude lithium compound.

2. The method for producing a purified lithium compound according to claim 1, wherein the crushing is performed using a sieve having an opening of 40 µm or more and 700 µm or less.

3. The method for producing a purified lithium compound according to claim 1 or 2, wherein the magnetic separator is an electromagnetic separator.

4. The method for producing a purified lithium compound according to any one of claims 1 to 3, wherein the magnetic separation is conducted a plurality of times.

5. The method for producing a purified lithium compound according to any one of claims 1 to 4, wherein the magnetic separation is conducted five or more times.

6. The method for producing a purified lithium compound according to any one of claims 1 to 5, wherein a magnetic flux density of a magnetic separation unit included in the magnetic separator is 3000 gauss or more.

7. The method for producing a purified lithium compound according to any one of claims 1 to 6, wherein the lithium compound includes lithium carbonate.

8. The method for producing a purified lithium compound according to any one of claims 1 to 7, wherein the lithium compound is used for producing a lithium transition metal composite oxide.

9. A method for producing a lithium transition metal composite oxide, comprising:
a crushing step of disaggregating aggregation of a crude lithium compound containing a magnetic substance;
a magnetic separation treatment step of conducting magnetic separation in a dry manner on the crushed crude lithium compound using a magnetic separator to remove the magnetic substance from the crushed crude lithium compound and purify a lithium compound; and
a firing step of mixing the purified lithium compound with a transition metal composite hydroxide or a transition metal composite oxide followed by firing.
